(19) Europäisches Patentamt / European Patent Office / Office européen des brevets

(11) **EP 4 376 343 A1**

(12) **EUROPEAN PATENT APPLICATION**
published in accordance with Art. 153(4) EPC

(43) Date of publication:
**29.05.2024 Bulletin 2024/22**

(21) Application number: **22846151.3**

(22) Date of filing: **15.07.2022**

(51) International Patent Classification (IPC):
**H04L 5/00** (2006.01)　　**H04B 17/309** (2015.01)
**H04B 17/373** (2015.01)　　**H04B 7/0408** (2017.01)

(52) Cooperative Patent Classification (CPC):
**H04B 7/0408; H04B 17/309; H04B 17/373;
H04L 5/00**

(86) International application number:
**PCT/KR2022/010325**

(87) International publication number:
**WO 2023/003281 (26.01.2023 Gazette 2023/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.07.2021 KR 20210095007**

(71) Applicant: **LG Electronics Inc.**
**Yeongdeungpo-gu**
**Seoul 07336 (KR)**

(72) Inventors:
- **KANG, Jiwon**
  **Seoul 06772 (KR)**
- **KIM, Hongsuk**
  **Seoul 06772 (KR)**
- **JUNG, Sunghoon**
  **Seoul 06772 (KR)**
- **KIM, Hyungtae**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR MEASURING NON-SERVING ENTITIES IN WIRELESS COMMUNICATION SYSTEM**

(57) Disclosed are a method and device for measuring non-serving entities in a wireless communication system. A method for a terminal to perform measurements in a wireless communication system according to an embodiment disclosed herein, comprises the steps of: receiving, from a network, configuration information about one or more resources to be measured associated with one or more non-serving entities, respectively; monitoring occurrences of events on the basis of the measurement results for the one or more resources to be measured; and transmitting instruction information based on the events to the network, wherein the threshold for the measurement results serving as the basis for the occurrence of events for the non-serving entities is equal to or lower than the threshold for measurement results serving as the basis for the occurrence of events for serving entities.

FIG.8

Receive, from network, configuration information on at least one measurement resource associated with each of at least one non−serving entity — S810

Monitor event occurrence based on measurement result for at least one measurement resource — S820

Transmit, to network, indication information based on event — S830

**Description**

[Technical Field]

The present disclosure relates to a wireless communication system, and in more detail, relates to a method and a device for measuring a non-serving entity in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical problem of the present disclosure is to provide a method and a device for measuring a non-serving entity in a wireless communication system.

An additional technical problem of the present disclosure is to provide a method and a device for responding to a failure in a serving entity based on measurement for a non-serving entity in a wireless communication system.

An additional technical problem of the present disclosure is to provide a method and a device for measuring a non-serving entity before a failure in a serving entity in a wireless communication system.

The technical objects to be achieved by the present disclosure are not limited to the above-described technical objects, and other technical objects which are not described herein will be clearly understood by those skilled in the pertinent art from the following description.

[Technical Solution]

A method for performing measurement by a terminal in a wireless communication system according to an aspect of the present disclosure includes receiving from a network configuration information on at least one measurement resource associated with each of at least one non-serving entity; monitoring event occurrence based on a measurement result for the at least one measurement resource; and transmitting indication information based on the event to the network, and a criteria for a measurement result which is a basis of event occurrence for the non-serving entity may be the same as a criteria for a measurement result which is a basis of event occurrence for a serving entity or a criteria for a measurement result which is a basis of event occurrence for the non-serving entity may be lower than a criteria for a measurement result which is a basis of event occurrence for the serving entity.

A method for receiving indication information by a base station from a terminal in a wireless communication system according to an additional aspect of the present disclosure includes transmitting to the terminal configuration information on at least one measurement resource associated with each of at least one non-serving entity; and receiving from the terminal the indication information based on an event associated with a measurement result for the at least one measurement resource, and a criteria for a measurement result which is a basis of event occurrence for the non-serving entity may be the same as a criteria for a measurement result which is a basis of event occurrence for a serving entity or a criteria for a measurement result which is a basis of event occurrence for the non-serving entity may be lower than a criteria for a measurement result which is a basis of event occurrence for the serving entity.

[Technical Effects]

According to the present disclosure, a method and a device for measuring a non-serving entity in a wireless communication system may be provided.

According to the present disclosure, a method and a device for responding to a failure in a serving entity based on measurement for a non-serving entity in a wireless communication system may be provided.

According to the present disclosure, a method and a device for measuring a non-serving entity before a failure in a serving entity in a wireless communication system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a method of transmitting multiple TRPs in a wireless communication system to which the present disclosure may be applied.

FIG. 8 is a diagram for describing a method for measuring a non-serving entity of a terminal according to an embodiment of the present disclosure.

FIG. 9 is a diagram for describing a method for configuring terminal measurement for a non-serving entity of a base station according to an embodiment of the present disclosure.

FIG. 10 is a diagram for describing a signaling procedure of a network side and a terminal according to the present disclosure.

FIG. 11 illustrates a block diagram of a wireless communication system according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access

- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

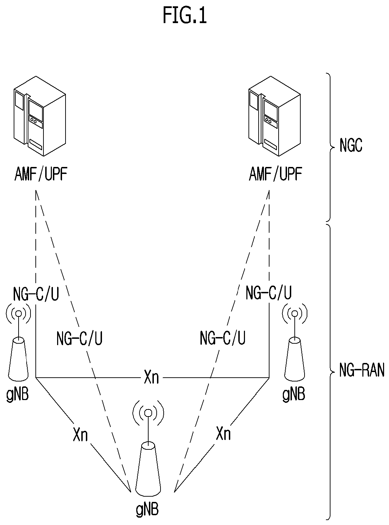

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

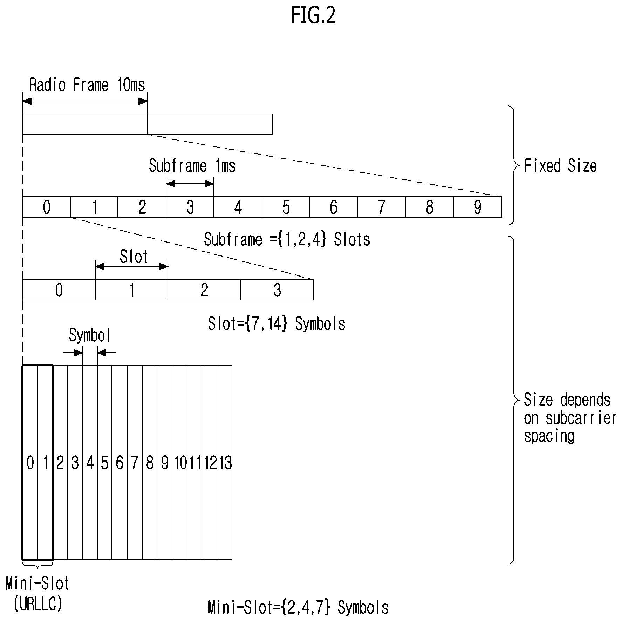

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot 10^3$ Hz and $N_f$ is 4096. Downlink and uplink transmission is configured (organized) with a radio frame having a duration of $T_f=1/(\Delta f_{max}N_f/100)\cdot T_c=10$ms. Here, a radio frame is configured with 10 subframes having a duration of $T_{sf}=(\Delta f_{max}N_f/1000)\cdot T_c=1$ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu}\in\{0,...,N_{slot}^{subframe,\mu}-1\}$ in a subframe and are numbered in an increasing order of $n_{s,f}^{\mu}\in\{0,...,N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

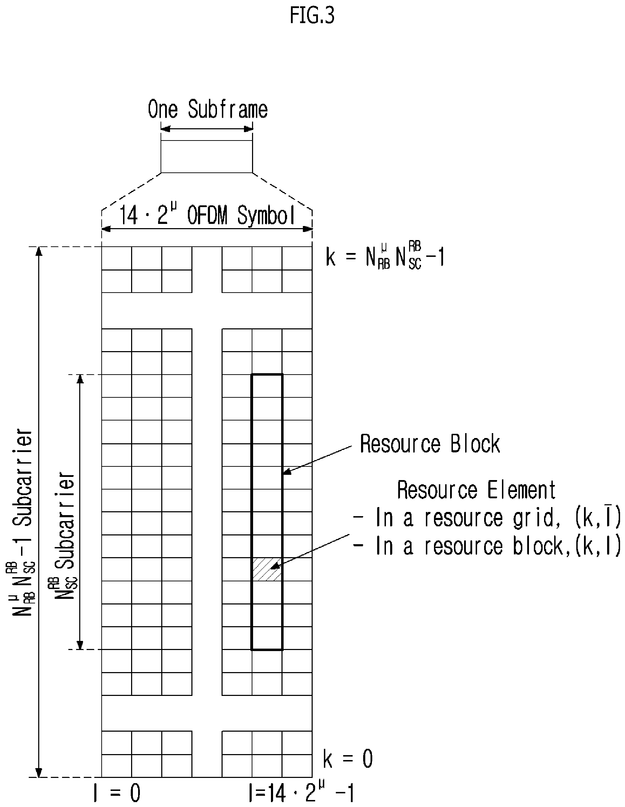

FIG. 2 is an example on μ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing. FIG. 3 illustrates a resource grid in a wireless communication system to which the present disclosure may be applied. In reference to FIG. 3, it is illustratively described that a resource grid is configured with $N_{RB}^{\mu}N_{SC}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{N}N_{SC}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,...,N_{RB}^{\mu}N_{SC}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{SC}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{SC}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

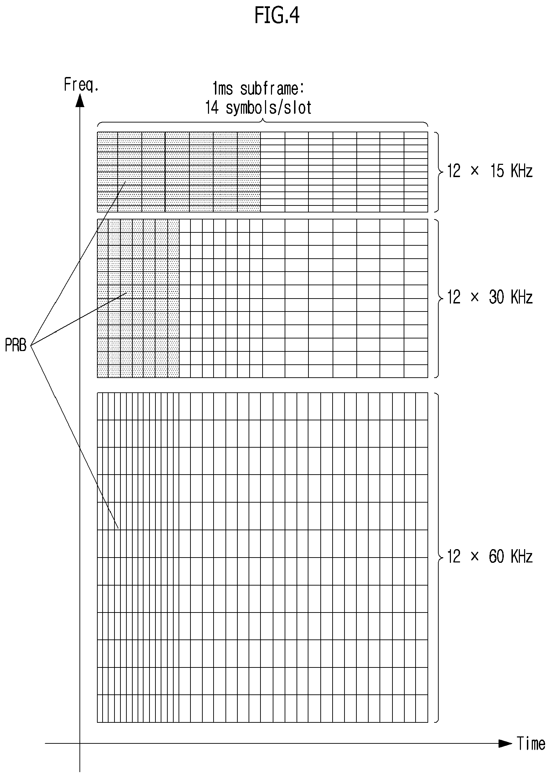

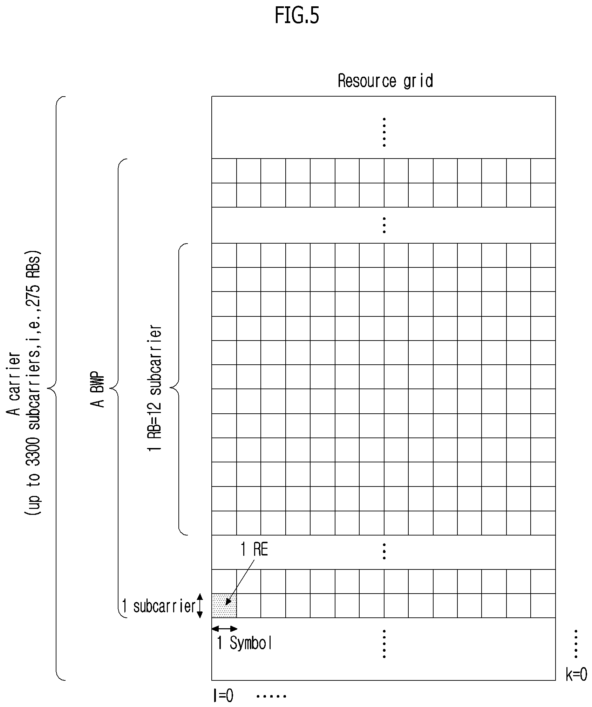

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

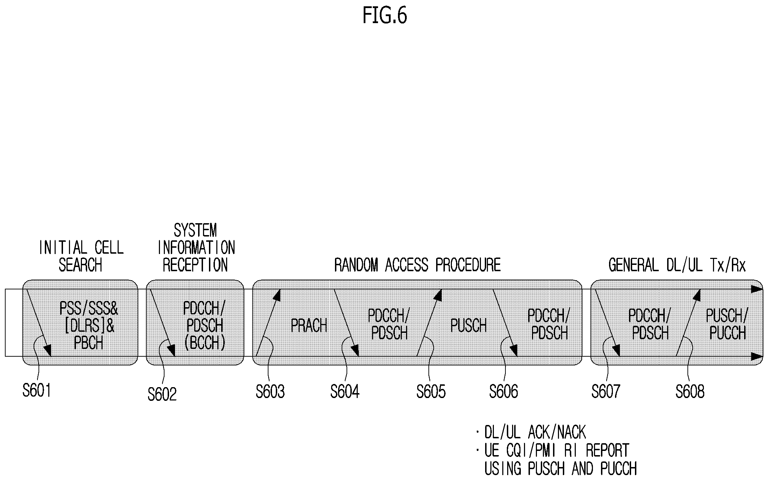

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
| --- | --- |
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted. DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

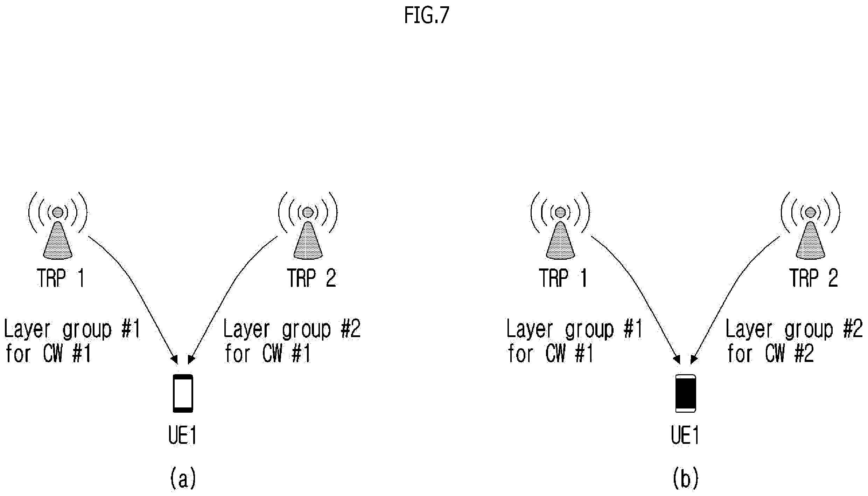

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7(a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method and/or a TDM (time division multiplexing) method.

Basic beam failure recovery (BFR)

The UE and/or the base station may perform uplink/downlink beam management (BM) for data transmission/reception. Here, BM may refer to a process of obtaining and maintaining a beam set that can be used for downlink and uplink transmission/reception.

Specifically, BM may include a beam measurement process of measuring the characteristics of a beamforming signal received from a base station or a UE, a beam determination process of determining a transmission beam (Tx beam) and a reception beam (Rx beam) of the base station or the terminal itself, a beam sweeping process of covering a spatial region using a transmit beam and/or a receive beam for a predetermined time interval in a predetermined manner, and a beam reporting process in which the UE reports information of the beam signal to the base station based on the beam measurement result.

While the above-described uplink/downlink BM process is performed, a beam mismatch problem may occur due to various factors. For example, when the UE moves or rotates, or when a radio channel environment is changed due to movement of a nearby object (e.g., when it was a line-of-sight (LoS) environment and then changed to a non-LoS environment as the beam was blocked), an optimal uplink/downlink beam pair may be changed. At this time, when the UE or the base station fails to track the changed optimal uplink/downlink beam pair (i.e., BM tracking), it may be considered that a beam failure has occurred.

The UE may determine whether beam failure has occurred based on the reception quality of a downlink reference signal (RS). In addition, the UE must report a report message on whether beam failure has occurred or a message for a beam recovery request (beam failure recovery request message, BFRQ message) to the base station. Upon receiving the message, the base station may perform a beam recovery process through various processes such as beam RS transmission or beam report request for beam recovery. This series of beam recovery processes is called a beam failure recovery (BFR) process.

The basic BFR operation includes a BFR process for a special cell (SpCell) (i.e., a primary cell, PCell) or a primary secondary cell (PScell) in which a contention-based PRACH resource exists. The BFR process may consist of a beam failure detection (BFD) process of the UE, a BFRQ transmission process, and a process of monitoring the response of the base station to the BFRQ, and each process may be performed in a serving cell.

Beam failure detection (BFD)

When the quality value (Q_out) of all PDCCH beams falls below a predefined value, it may be considered that one beam failure instance has occurred. Here, the quality value may be determined based on a hypothetical block error rate (BLER). That is, the theoretical BLER may mean a probability that demodulation of the control information fails when the control information is transmitted on a specific PDCCH.

In addition, one or a plurality of search spaces for monitoring the PDCCH may be configured in the UE, and a PDCCH beam may be configured differently for each search space. In this case, when the quality values of all PDCCH beams fall below the predefined value, it means that the quality values of all PDCCH beams fall below the BLER threshold.

Two methods, which will be described later, may be supported as a method for the UE to receive an indication/configuration of a BFD-RS from the base station for determining whether a beam failure instance has occurred.

As a first method, an implicit configuration method of BFD-RS may be supported. A control resource set (CORESET) ID, which is a resource region in which the PDCCH may be transmitted, is configured in each search space, and RS information (e.g., CSI-RS resource ID, SSB ID) QCLed in terms of spatial RX parameters may be indicated/configured for each CORESET ID. In view of spatial reception parameters, the QCLed RS may be indicated or configured through transmit configuration information (TCI). That is, the BFD-RS may be implicitly configured/indicated to the UE based on QCL information indicated or configured through TCI.

Here, when the base station indicates or configures the RS (i.e., QCL Type D RS) that is QCL from the point of view of the spatial reception parameter to the UE, when the UE receives a specific PDCCH DMRS, the beam used for reception of the RS that is QCL from the point of view of the spatial reception parameter may be used. That is, a signal may be transmitted between spatially QCLed antenna ports through the same transmission beam or similar transmission beams (e.g., when beam widths are different while beam directions are the same/similar).

As a second method, an explicit configuration method of the BFD-RS may be supported. The base station may explicitly configure or indicate the UE to use the beam RS for BFD. In this case, the beam RS may correspond to the 'all PDCCH beams'.

The UE physical layer may inform the MAC sublayer that the BFI(beam failure instance) has occurred whenever an event in which the theoretical BLER measured based on the configured (or indicated) BFD-RS deteriorates beyond a specific threshold value occurs. And, when BFI occurs a certain number of times (e.g. 'beamFailureInstanceMaxCount') within a certain time (e.g., 'BFD timer'), the UE MAC sublayer may determine that a beam failure has occurred and initiate a related RACH operation.

BFRQ (PRACH based): new beam identification and PRACH transmission

As described above, when more than a certain number of BFIs are generated, the UE may determine that a beam failure has occurred, and may perform a beam failure recovery operation. The UE may perform a BFRQ process based on RACH (i.e., PRACH) as an example of a beam failure recovery operation. Hereinafter, the corresponding BFRQ process will be described in detail.

When a beam failure occurs, the base station may configure a candidate beam RS list ('candidateBeamRSList') including replaceable candidate beam RSs to the terminal through RRC signaling. And, the base station may configure a dedicated PRACH resource for the candidate beam RSs. In this case, the dedicated PRACH resource may be a non-contention based PRACH resource (or a contention free PRACH resource). When an alternative beam RS is not found in the candidate beam RS list, the UE may select at least one of preset SSB resources. And, the UE may transmit a contention-based PRACH to the base station based on at least one selected.

Enhanced beam failure recovery

When carrier aggregation (CA) is applied, there may be no uplink carrier (UL carrier) in a specific SCell. That is, in the case of an SCell having only a downlink carrier, uplink transmission is impossible. And, even if there is an uplink carrier in the SCell, the contention-based PRACH cannot be configured. Therefore, the PRACH-based BFR process to which CA is applied may be limitedly applied only to the SpCell (PCell or PSCell), and the BFR process may not be supported for the SCell. That is, according to the basic BFR operation, the PRACH-based BFR operation in the SpCell may not be supported in the SCell.

Specifically, when a high-frequency band requiring BFR is configured to the SCell, the PRACH-based BFR process may not be supported in the corresponding high-frequency band. For example, when the PCell is operated in a low frequency band (e.g., 6 GHz or less) and the SCell is operated in a high frequency band (e.g., 30 GHz), there is a problem that the PRACH-based BFR process is not supported in a high-frequency band that requires more BFR support.

In order to solve the above-mentioned problem, the improved BFR operation includes an operation for the BFR of the SCell. For example, the UE may perform BFRQ for the SCell by using a dedicated PUCCH resource for BFRQ configured in the SpCell. Hereinafter, the 'dedicated PUCCH resource' will be referred to as BFR-PUCCH for convenience of description.

The role of the BFR-PUCCH is to report only 'BF occurrence information for SCell' to the base station. And, detailed information related to the generated BF may be transmitted to the base station through the BFR MAC-CE or UCI as a subsequent report.

Here, the detailed information transmitted as the follow-up report may include information on the SCell(s) in which BF has occurred, whether or not there is a new candidate beam for the SCell(s) in which BF has occurred, and (if there is a new candidate beam) the corresponding beam RS ID.

In addition, the BFR-PUCCH may use the same PUCCH format as an SR (scheduling request), and may be defined through the ID of a specific SR for BFR use. If the UL-SCH allocated from the base station exists when the UE detects the BF for the SCell, the UE may omit the BFR-PUCCH transmission procedure like the SR transmission procedure, and transmit the BFR MAC-CE to the base station through the directly allocated UL-SCH.

Radio link monitoring (RLM) procedure

While monitoring the downlink radio link quality for the primary cell (PCell or PSCell), if it is determined that the radio link quality is degraded below the threshold value, the UE may report the RLM result to the base station.

Specifically, the downlink radio link quality of the primary cell may be monitored by the UE for the purpose of notifying/indicating an out-of-sync state or an in-sync state to a higher layer. The UE does not need to monitor the downlink radio link quality of the BWP other than the active downlink BWP in the primary cell.

If the active downlink BWP is an initial BWP and is for SS/PBCH block and CORESET multiplexing pattern 2 or 3, when the associated SS/PBCH block index is provided by 'RadioLinkMonitoringRS', which is a higher layer parameter, the UE may perform RLM using the associated SS/PBCH block.

And, for the UE, when the secondary cell group (SCG) is configured, the higher layer parameter 'rlf-TimersAndConstants' is provided, and it is configured to not be released, in the SCG, the downlink radio link quality of the PSCell may be monitored by the UE for the purpose of notifying/indicating an out-of-sync state/in-sync state to a higher layer. The UE does not need to monitor the downlink radio link quality in the DL BWP other than the active downlink BWP in the primary secondary cell.

The UE may be provided with the CSI-RS resource configuration index by the higher layer parameter 'csi-RS-Index' or the SS/PBCH block index by 'ssb-Index'.

When a multi-downlink BWP is configured for the serving cell, the UE may perform a radio link monitoring operation using the RS corresponding to the resource index provided by 'RadioLinkMonitoringRS' for the active downlink BWP. And, if 'RadioLinkMonitoringRS' is not provided for the active downlink BWP, the UE may perform a radio link monitoring operation using RS(s) provided through the active TCI state configured for PDCCH reception in CORESET of the active downlink BWP.

In a frame in which radio link quality is evaluated, if the radio link quality is worse than a threshold (e.g., Qout) for all resources of a resource set for radio link monitoring, the physical layer of the UE may indicate to the higher layer that the state of the radio link is out of synchronization ('out-of-sync'). In the frame in which the radio link quality is evaluated, if the radio link quality is better than the threshold Qin for any resource in the resource set for radio link monitoring, the physical layer of the UE may indicate to an higher layer that the state of the radio link is in a synchronized state ('in-sync').

When out-of-sync (OOS) occurs in L1 (layer 1, i.e., PHY), an indication may be sent to L2 (layer 2). When OOS occurs more than the predetermined number of times during a predetermined time period, L2 may be determined to be a radio link failure (RLF). Alternatively, when the number of retransmissions of a radio link control (RLC) packet reaches the maximum value, it may be determined to be a RLF. When a synchronization state (in-sync) (e.g., link recovery) does not occur for a certain period of time after RLF declaration, report therefor may be prepared/updated and a RRC re-establishment process may be performed. This report may be named, e.g., varRLF-Report, and may include identification information on the best SSB and/or CSI-RS resource(s) of neighboring cell(s) configured for a purpose of radio resource management (RRM) and quality information (e.g., a RSRP, a RSRQ, a SINR, etc.). When this report is available, a terminal may report to a network an indication (e.g., via a 1-bit indicator) that information corresponding to the report is available in a completion message of a RRC re-establishment process. For reference, a RRC re-establishment process may include a terminal transmitting a RRC re-establishment request message (e.g., RRCReestablishmentRequest) to a network, a terminal receiving a RRC re-establishment message (e.g., RRCReestablishment) from a network and a terminal transmitting a RRC re-establishment completion message (e.g., RRCReestablishmentComplete) to a network.

Based on report availability indication information from a terminal, a base station may request report information of a terminal (e.g., VarRLF-Report) through a terminal information process after a RRC re-establishment process. A terminal information process may include, for example, a terminal receiving a terminal information request message (e.g., UEInformationRequest) from a network and a terminal transmitting a terminal information response message (e.g., UEInformationResponse) to a network. For example, report information of a terminal (e.g., VarRLF-Report) may be included in a terminal information response message (e.g., UEInformationResponse) and reported to a base station.

Measurement for Non-serving Entity

According to the above-described RLM procedure, after monitoring the occurrence of a RLF for a PCell among serving cells (when there is no normally operating PSCell in a secondary cell group) and performing a RRC re-establishment process, RRM measurement configuration and report for a neighboring cell is performed. Measurement for a non-serving cell is also possible in a RLM procedure, but there is a significant problem in signaling overhead and delay. In addition, since a BFR procedure is performed for a BFD-RS of a serving cell, there is a problem that measurement for a non-serving cell is not supported.

The present disclosure describes a measurement method for a non-serving entity. In examples of the present disclosure, a non-serving entity may include at least one candidate entity that may be configured/indicated to a terminal excluding a serving entity configured/indicated to a terminal. Here, an entity may correspond to a predetermined construction unit on a network side that performs transmission or reception with a terminal. For example, a term of entity may correspond to one of a cell, a TRP, a panel, a CORESET pool, a BWP, a beam, a TCI state or a QCL reference RS or may correspond to a combination of at least two.

In the present disclosure, measurement for a non-serving entity is not excluded from being associated with a purpose for reporting a measurement result itself to a network, but it is mainly assumed to be associated with a purpose for a terminal to monitor whether an event based on a measurement result (e.g., a radio link failure, a beam failure, etc.) occurs. For example, the present disclosure may include examples in which a specific RS (or RS resource) for measuring at least one non-serving entity is configured for a terminal. In addition, the present disclosure may include examples in which whether an event for a non-serving entity occurs is monitored based on measurement based on a corresponding specific RS based on a measurement configuration for a terminal (e.g., a measurement target RS, a reporting method of a measurement result). In addition, the present disclosure may include examples in which a terminal performs an operation according to event occurrence or transmits a request based on event occurrence to a network.

According to examples of the present disclosure, a beam management and multi-TRP (mTRP) operation between a plurality of TRPs corresponding to a different cell may be efficiently supported. For example, a RLM operation may be extended/improved based on a variety of configurations (e.g., a DL RS-related configuration for a corresponding TRP) for a non-serving entity (e.g., a TRP having a cell identifier different from a serving cell (e.g., a TRP having a physical cell identifier (PCI)). For example, RLM for a plurality of cells/TRPs belonging to the same CC/BWP may be performed.

For example, as a representative example of a non-serving entity, a cell that operates based on a cell identifier different from a serving cell in the same CC/BWP may be assumed for a purpose of a mTRP operation, etc., which is referred to as an assisting cell (ACell) in the following examples. This name is not intended to limit a scope of the present disclosure, a term of assist only represents the concept of non-serving/cooperation/neighboring/secondary/assisting, etc. and a term of cell may be replaced with a variety of entities such as a TRP, etc. as described above. In addition, an example of an ACell for a non-serving entity is just for simplicity of a description, and a scope of the present disclosure is not limited thereto, and a term of ACell may be replaced with a variety of network configuration units as described above

In addition, for simplicity of a description for the present disclosure, a RLM procedure based on an ACell configuration is described as a representative example, but a scope of the present disclosure may be also applied to a BFR procedure based on an ACell configuration. In examples below, a specific RS (e.g., a RLM RS) configured for an ACell may be also interpreted/used as a BFD RS. In this regard, a serving cell assumed as a representative example of a serving entity in the following description corresponds to a SpCell (i.e., a PCell/a PSCell) from a RLM perspective and may include not only a SpCell but also a SCell from a BFR perspective.

In the present disclosure, a QCL type-D RS may correspond to a spatial parameter, i.e., a QCL reference RS from a beam perspective and further, it may be also extended and interpreted as a reference RS for a corresponding parameter or another beam/spatial relation parameter. In addition, in an environment where analog beamforming is not used as in a low frequency band, an indication of a QCL type-D RS may be omitted. In this case, a QCL type-D RS in the present disclosure may be interpreted as a QCL reference RS (e.g., when there is only one reference RS in a TCI state, it may refer to a corresponding RS).

In the present disclosure, a RS that an ID of a specific entity is configured or a RS associated with/based on an ID of a specific entity may correspond to a RS that an ID of a corresponding entity is used (e.g., applied to sequence initialization) to generate a sequence of a corresponding RS and/or is configured separately from an ID (e.g., PCI) of a corresponding entity (e.g., a neighbor-cell RS for mobility, a SSB from a non-serving cell, etc.).

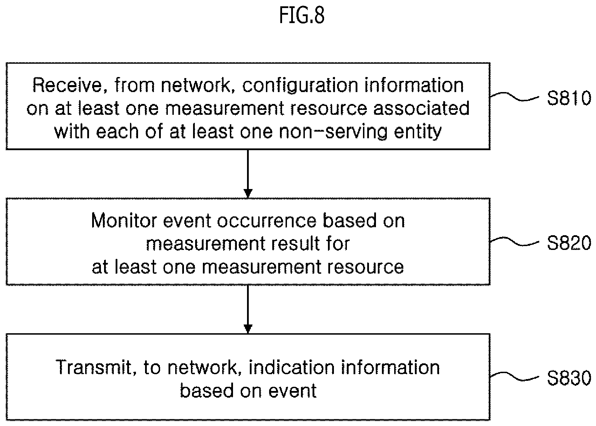

FIG. 8 is a diagram for describing a method for measuring a non-serving entity of a terminal according to an embodiment of the present disclosure.

In S810, a terminal may receive configuration information on at least one measurement resource associated with each of at least one non-serving entity from a network.

A measurement resource may be explicitly or implicitly indicated to a terminal. An explicit indication may include configuring/indicating some/all of RS resources preconfigured for a non-serving entity as the measurement resource. An implicit indication may include using some/all of RS resources determined according to a predetermined rule among RS resources preconfigured for a non-serving entity as the measurement resource.

In S820, a terminal may monitor an event at least based on a measurement result for at least one measurement resource.

A measurement result may include various types of metrics. For example, first type measurement/metric with high and precise computational complexity (e.g., hypothetical BLER) or second type measurement/metric with low and coarse computational complexity (e.g., a RSRP/a RSRQ/ a SINR) may be used.

The number of RS resources on which a measurement result is based may be limited (i.e., the maximum value may be configured). For example, a priority, a ratio, etc. for a RS resource may be applied according to a terminal calculation capability or required accuracy, etc. In addition, a limit on the number of RS resources may be applied (i.e.,

the maximum value may be configured) with or without considering a computational burden on a serving cell.

An event may be based on whether a quality value for a non-serving entity decreases to be less than or equal to/below a predetermined threshold or increases to be equal to or greater than/exceed a predetermined threshold. For example, an event may include that a follow-up procedure (e.g., event-based reporting) is performed when the number of times that a quality value is lower than a predetermined threshold occurs a predetermined number of times.

In S830, a terminal may transmit event-based indication information to a network.

Indication information may follow an aperiodic/semi-static/periodic reporting method, a UCI reporting method or a CSI reporting method.

For example, event-based indication information may be information indicating that an event occurred or may be information indicating a quality value related to an event.

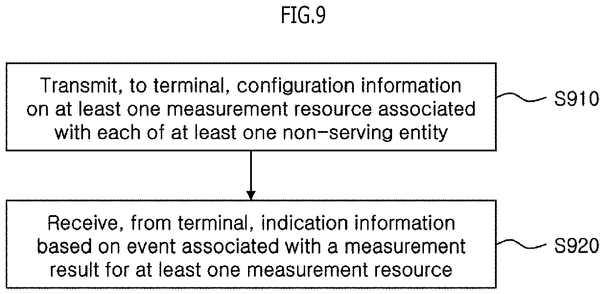

FIG. 9 is a diagram for describing a method for configuring terminal measurement for a non-serving entity of a base station according to an embodiment of the present disclosure.

In S910, a base station may transmit configuration information on at least one measurement resource associated with each of at least one non-serving entity to a terminal

Since specific details of measurement resource configuration information are the same as those described by referring to S810 in FIG. 8, an overlapping description is omitted.

In S920, a base station may receive indication information based on an event associated with a measurement result for at least one measurement resource from a terminal.

Since specific details of a measurement result and an event are the same as those described by referring to S820 in FIG. 8, an overlapping description is omitted.

Since specific details of indication information are the same as those described by referring to S830 in FIG. 8, an overlapping description is omitted.

Hereinafter, specific examples of a measurement method for a non-serving entity (e.g., an ACell) according to the present disclosure are described.

Embodiment 1

A terminal may explicitly or implicitly configure measurement resource(s) for an ACell from a network separately from measurement resource(s) for a serving cell (SC).

For example, a measurement resource may correspond to a RLM RS resource. In addition, a measurement resource may correspond to a BFD RS resource. In addition, a measurement resource may correspond to a RLM RS resource and a BFD RS resource. A term of RS resource may be simply referred to as a RS as long as there is no risk of confusion.

For example, ACell measurement resource(s) may serve as a basis for an ACell's link quality measurement. For example, ACell measurement resource(s) may be utilized to determine whether an ACell fails and/or to quickly restore a serving cell into an ACell when a serving cell fails. In this process, a result measured for measurement resource(s) of an ACell (e.g., a quality value) may be reported to a network.

A performance metric for an ACell measurement resource may be based on one of a first type metric and a second type metric. For example, a first type metric may correspond to a hypothetical BLER like RLM RS-based measurement for a serving cell and a second type metric may correspond to a RSRP, a RSRQ and/or a SINR, etc. like RRM RS-based quality measurement.

A second type metric (or second type measurement) may reduce computational complexity of a terminal compared to a first type metric (or first type measurement). In particular, the lowest complexity is expected when a RSRP is used. Accordingly, when a second type metric is applied to non-serving entity measurement, complexity of metric calculation may be reduced and calculation power of a terminal may be used for other candidate entity(s) and/or other measurement resource(s), so monitoring for more candidate entities/measurement resources may be performed.

For example, when a second type metric is applied to non-serving entity measurement, a terminal may be defined (i.e., applied without signaling between a terminal and a network) or configured (i.e., applied through signaling between a terminal and a network) to monitor more ACell RLM RS resource(s) than RLM RS resources for a serving cell.

Even when a first type metric is applied to non-serving entity measurement, it may be defined/configured to measure more RLM RSs than RLM RSs configured for a serving cell for a non-serving entity, but when operation deterioration in a serving cell is expected, a measurement burden for a non-serving entity may be configured not to be higher than a measurement burden for a serving cell (or less than a predetermined threshold).

Since a first type metric more accurately represents PDCCH quality expected in handover to an ACell compared to a second type metric, applying a first type metric to ACell measurement may lower the probability of a handover failure.

When a second type metric is applied to ACell measurement, a corresponding measurement resource/RS may be interpreted as a resource/a RS for measuring quality degree for an ACell (i.e., general measurement) instead of being used for a RLM purpose (i.e., determining whether a link failed). In other words, even when a RLM RS is configured/indicated for a non-serving entity, a terminal may interpret and apply a corresponding RLM RS as a general measurement RS when it is configured/indicated to measure a second type metric based on a corresponding RLM RS.

Embodiment 1-1

A terminal may receive from a network information that explicitly configures/indicates identification information of a measurement resource for a non-serving entity.

For example, some/all of DL RS configuration information or TCI state configuration information for an ACell configured for a purpose of an inter-cell mTRP or beam management for a terminal may be designated as a measurement resource for an ACell (e.g., an ACell RLM RS). For example, among IDs for a SSB/a CSI-RS/a TCI state associated with serving cell PCI and another PCI, an ACell measurement resource (e.g., ACell RLM RS(s)) may be designated.

As an additional example, some/all of neighbor cell RSs configured for a purpose of RRM/mobility (e.g., CSI-RS for mobility) for a terminal may be designated as a measurement resource for an ACell (e.g., an ACell RLM RS).

Embodiment 1-2

Identification information of a measurement resource for a non-serving entity may be implicitly configured/indicated for a terminal.

For example, a QCL Type-D RS (or a QCL reference RS) of a beam RS (e.g., a TCI state) configured for a CORESET belonging to a CORESET pool associated with ACell identification information (e.g., corresponding to an ACell ID) may be implicitly (i.e., without a separate configuration/indication) configured as a measurement resource for an ACell. For example, a CORESET pool associated with ACell identification information may correspond to a CORESET pool associated with PCI different from PCI of a serving cell. For example, a CORESET pool associated with ACell identification information may be also configured for a mTRP (or multi-DCI-based mTRP) operation for a terminal.

In this example, in selecting measurement resource(s) for an ACell (e.g., RLM RS) among RS(s) provided through an active TCI state configured for PDCCH reception for CORESET(s) belonging to a specific CORESET pool, when an active TCI state includes only one RS, it may be used as a measurement resource for an ACell. If the active TCI state includes two RSs, a terminal expects that one RS is QCL Type-D (i.e., does not expect that both RSs are QCL Type-D), and may use a corresponding RS as a measurement resource for an ACell. In addition, a terminal may not be required to measure an ACell for an aperiodic or semi-static RS. In addition, the number of measurement resources for an ACell that should be measured by a terminal may be determined depending on the number of SSBs. In addition, a terminal may select a RS based on a TCI state configured in a CORESET associated with corresponding search space in order from search space with the shortest monitoring period. In addition, for a plurality of CORESETs associated with search space having the same monitoring period, a CORESET may be selected in order from the highest CORESET index and a RS may be selected based on a TCI state configured for a corresponding CORESET.

If the number of measurement resources selected for an ACell is determined/managed independently (or separately) from the number of RLM RSs configured for serving cell RLM, a method described in relation to Table 6 described later for an ACell (e.g., a method described by assuming that a value of the maximum number of SSBs (e.g., L_max) for a serving cell is 4) may be applied as it is. If the number of measurement resources for an ACell is managed by being integrated with the number of serving cell RLM RSs, a rule according to a predetermined priority/ratio may be applied. For example, when there is a room (or a budget) in a processing capacity of a terminal after preferentially determining the number of serving cell RLM RSs and selecting/applying the corresponding number of RLM RSs, the number of measurement resource(s) for an ACell may be determined and the corresponding number of measurement resource(s) may be selected.

As an additional example, among a plurality of TCI states configured for a terminal, a QCL Type-D RS (or a QCL reference RS) of TCI states associated with ACell identification information (e.g., corresponding to an ACell ID) may be configured implicitly (i.e., without a separate configuration/indication) as a measurement resource for an ACell. For example, a plurality of TCI states may be configured for beam management/indication. For example, among M unified TCI states (i.e., DL TCI states and/or UL TCI states), M1 (M1 is less than or equal to M) TCI states associated with ACell identification information may be selected.

In this example, when the number of TCI states associated with ACell identification information exceeds a predetermined threshold value (e.g., a specific maximum value), some TCI states may be selected through a predetermined rule.

For example, it may be selected in high/low order of TCI state identification indexes (ID).

Additionally or alternatively, it may be selected in high/low order of RS identification indexes (ID).

Additionally or alternatively, a RS with high/low time density and/or frequency density may be selected first. Here, time density is higher as the number of RS transmissions is higher during a predetermined unit time interval (e.g., as a RS transmission period is shorter or the number of repetitions is higher) and frequency density is higher as the number of RS mapping REs increases during a predetermined frequency unit.

Additionally or alternatively, it may be preferentially selected based on a RS type/usage. For example, a TRS (e.g., a tracking RS or a CSI-RS that higher layer parameter TRSInfo is configured) may be selected in preference to other CSI-RSs. Alternatively, a SSB may be selected in preference to a CSI-RS.

When a combination of examples above is assumed, a specific RS type may be selected preferentially, but an ACell measurement resource may be selected (i.e., implicitly configured/indicated) in order of RS IDs among corresponding RS types.

Embodiment 2

When a measurement resource for a non-serving entity is configured for a terminal and measurement performance and event monitoring/measurement result reporting based thereon is configured for a terminal, the number of measurement resources which should be measured/monitored by a terminal may increase, thereby increasing the complexity and burden of a terminal operation. In order to minimize the increase in terminal complexity, the number of ACell measurement resources which should be measured/monitored by a terminal may be limited.

For example, the maximum value for an ACell measurement resource may be defined/configured. In addition, a terminal's capability for the maximum value of an ACell measurement resource may be reported to a network (e.g., the maximum value of the number of ACell RLM RSs may be reported to a network) and a network may consider it to configure the number of ACell measurement resources (i.e., less than or equal to the maximum value reported by a terminal) to a terminal.

A limit on the number of ACell measurement resources may be determined/applied in association with a limit on the number of RLM RSs for a serving cell.

According to the maximum number of SSBs for a serving cell (e.g., L_max), the maximum number of RSs that may be cofigured for a BFD and RLM purpose (e.g., N_LR-RLM) may be determined and among them, the maximum number of RSs used for a RLM purpose (e.g., N_RLM) may be determined and the number of RSs used for a BFD purpose may be determined as a specific number (e.g., 2). In the existing method that does not consider an ACell, RLM is performed only for a SpCell (i.e., a PCell and/or a PSCell), so only the specific number (e.g., 2) of BFD RSs may be configured/applied in a SCell. Here, L_max is the maximum number of SSBs per half frame and may be determined based on a frequency range (FR) of a corresponding cell, subcarrier spacing (SCS), a duplex method (FDD/TDD), whether shared spectrum access is available, etc. For example, as in Table 6, a value of N_LR-RLM and N_RLM may be defined in association with L_max.

[Table 6]

| L_max | N_LR-RLM | N_RLM |
|---|---|---|
| 4 | 2 | 2 |
| 8 | 6 | 4 |
| 64 | 8 | 8 |

A limit on the number of measurement resources for an ACell (e.g., a RLM RS) is referred to as N_RLM_Second and may be determined/configured based on the following method. Method 1 is to unify and determine/configure a RLM and BFD RS limit for a serving cell (e.g., N_LR-RLM) and the number of measurement resources for an ACell. Method 1 may be classified into Method 1-1 in which the number of measurement resources for an ACell is defined independently (or separately) from a RLM RS limit of a serving cell (e.g., N_RLM) and Method 1-2 in which the number of measurement resources for an ACell is unified and defined.

Method 2 is to independently (or separately) determine/configure a RLM and BFD RS limit for a serving cell (e.g., N_LR-RLM) and the number of measurement resources for an ACell.

According to Method 1-1, a limit on the number of measurement resources for an ACell (e.g., N_RLM_Second) may be defined as in Table 7 below.

[Table 7]

| L_max | N_LR-RLM | N_RLM | N_RLM_Second |
|---|---|---|---|
| 4 | 2+(0,...,M1+d1) | 2 | M1 |
| 8 | 6+(0,...,M2+d2) | 4 | M2 |

(continued)

| L_max | N_LR-RLM | N_RLM | N_RLM_Second |
|---|---|---|---|
| 64 | 8+(0,...,M3+d3) | 8 | M3 |

In Table 7, when BFD for an ACell is introduced, a value of d1, d2 and d3 corresponds to the maximum value of the number of BFD RSs for each case. For example, it may be d1=d2=d3=2, but d1, d2 and d3 may have a value other than 2, and at least one of d1, d2 or d3 may have a different value. In this example, a terminal calculation burden for measuring/monitoring a RLM RS may be equal/similar in a serving cell and an ACell. Accordingly, a value of parameters may be defined/configured to have a relationship of N_RLM >= N_RLM_Second. For example, M1 may have a value of 1 or 2, M2 may have a value of 1 to 4 and M3 may have a value of 1 to 8.

If a measurement metric for an ACell measurement resource is a second type metric (e.g., a RRM-related RSRP/RSRQ/SINR) as described in Embodiment 1, a measurement burden for an ACell is lower compared to a first type metric (e.g., a RLM-related hypothetical BLER) (or compared to a RLM measurement burden for a serving cell), so a value of parameters may be defined/configured to have a relationship of N_RLM <= N_RLM_Second.

According to Method 1-2, a limit on the number of unified measurement resources for a serving cell and an ACell (e.g., N_RLM) may be defined as in Table 8 below.

[Table 8]

| L_max | N_LR-RLM | N_RLM |
|---|---|---|
| 4 | 2+(0,...,M1+d1) | 2+ M1 |
| 8 | 6+(0,...,M2+d2) | 4+ M2 |
| 64 | 8+(0,...,M3+d3) | 8+ M3 |

In Table 8, when BFD for an ACell is introduced, a value of d1, d2 and d3 corresponds to the maximum value of the number of BFD RSs for each case. For example, it may be d1=d2=d3=2, but d1, d2 and d3 may have a value other than 2 and at least one of d1, d2 or d3 may have a different value. In this example, a value of N_RLM may be increased and both serving cell RLM and ACell RLM may be performed within a N_RLM limit.

In this example, a value of N_RLM may be increased and both serving cell RLM and ACell RLM may be performed within a N_RLM limit.

Since a serving cell and ACell measurement resource limit is unified and managed, this example may be more suitable when a measurement metric of a serving cell is the same as a measurement metric of an ACell. For example, for a measurement metric of an ACell, a first type metric of Embodiment 1 (e.g., a RLM-related hypothetical BLER) may be applied.

In applying this example, a priority may be defined between a serving cell RLM RS and an ACell RLM RS. For example, a rule for preferentially selecting serving cell RLM RS(s) as described above and selecting ACell RLM RS(s) according to the remaining budget may be defined and applied.

In addition, a base station may configure/indicate to a terminal at what ratio a serving cell and ACell(s) divide and configure L_RLM. If a terminal does not receive signaling for a configuration/an indication of a base station, a predetermined ratio determined according to a predefined or predetermined rule may be applied. For example, when there is no signaling for a ratio, if the number of ACells is one, 1/2 of N_RLM may be defined/applied as being configured for a serving cell and the remaining 1/2 for an ACell.

An example of values defined in an example of Table 8 may be configured to be applied only when a plurality of CORESET pools having a different cell ID are configured for a corresponding CC.

If a single or a plurality of CORESETs configured with a single cell ID exist in a corresponding CC, a value in Table 6 may be used/applied or a value in Table 8 may be used/applied, but a corresponding value may be defined to be applied to a serving cell (i.e., the number of RLM RSs increased compared to Table 6 may be applied only to a serving cell). For example, values in Table 6 may be applied in case of a single cell single CORESET pool and values in Table 8 may be applied in case of a single cell multiple CORESET pool.

According to Method 2, a limit on the number of measurement resources for an ACell (e.g., N_RLM_Second) may be defined as in Table 9 below.

[Table 9]

| L_max | N_LR-RLM | N_RLM | N_LR-RLM_Second | N_RLM_Second |
|-------|----------|-------|-----------------|--------------|
| 4 | 2 | 2 | M1,...,M1+d1 | M1 |
| 8 | 6 | 4 | M2,...,M2+d2 | M2 |
| 64 | 8 | 8 | M3,...,M3+d3 | M3 |

In Table 9, when BFD for an ACell is introduced, a value of d1, d2 and d3 corresponds to the maximum value of the number of BFD RSs for each case. For example, it may be d1=d2=d3=2, but d1, d2 and d3 may have a value other than 2 and at least one of d1, d2 or d3 may have a different value. In an example of Table 9, N_LR-RLM_Second corresponds to an unified limit on the number of BFD RSs and RLM RSs for an ACell. A value of N_LR-RLM_Second may be equal to or greater than a value of N_RLM_Second and may be also defined as N_RLM_Second + d1 (or d2 or d3) or less.

For example, it may be N_RLM_Second = N_RLM and N_LR-RLM_Second = N_LR-RLM. In this case, it may be also defined/configured to apply values in Table 6 to an ACell.

Embodiment 3

In the present disclosure, since RLM for ACell(s) does not monitor link quality for a current serving cell, the same or more precise value as RLM for a serving cell may not be required. Considering it, other than a measurement resource type which may be used as a serving cell RLM measurement resource, various types of measurement resources (e.g., a RS) may be used as an ACell measurement resource.

For example, a measurement result (or a reporting value or event monitoring) for an ACell measurement resource may be subject to a criteria which is the same as or alleviated (or lower) than that required for a serving cell RLM RS. For example, a criteria for event occurrence for a non-serving entity or a serving entity may be defined/applied as a filtering time interval for a measurement result, a reporting layer, periodicity of a measurement resource, density of a measurement resource, etc. For example, compared to a criteria for event occurrence for a serving entity, a criteria for event occurrence for a non-serving entity may include at least one of a case in which a length of a time interval to which filtering for a measurement result is applied is the same or shorter, a case in which a reporting layer is the same or lower, a case in which periodicity of a measurement resource is the same, longer or none or a case in which frequency density of a measurement resource is the same or lower.

Examples below mainly describe ACell RLM and ACell RLM RS, but may be also applied to ACell BFD and ACell BFD RS.

Embodiment 3-1

A measurement/reporting value for an ACell RLM RS may use a value filtered for a shorter time interval compared to a L3 (layer 3, a third layer) filter applied to serving cell RLM. For example, a measurement/reporting value may be generated based on one measurement (e.g., one-shot measurement).

Embodiment 3-2

Reporting for an ACell RLM RS may be defined as lower layer (e.g., L1/L2) reporting, not higher layer (e.g., L3) reporting. For example, reporting of a measurement result for an ACell RLM RS may be performed by applying an aperiodic/semi-static/periodic UCI reporting and/or aperiodic/semi-static/periodic CSI reporting method.

Embodiment 3-3

A RS which may be used as a serving cell RLM RS is limited to a periodic RS, but a periodic/aperiodic/semi-static RS may be used as an ACell RLM RS.

Embodiment 3-4

A CSI-RS with frequency density less than 1 (e.g., 0.5 REs per RB, i.e., 1 RE per 2 RBs) as well as a CSI-RS with frequency density equal to or greater than 1 allowed as a serving cell RLM RS (e.g., 1 or 3 REs per RB) may be also used as an ACell RLM RS.

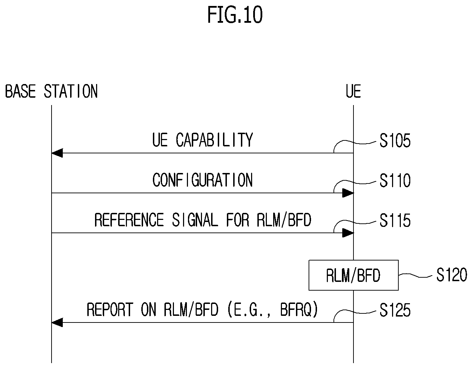

FIG. 10 is a diagram for describing a signaling procedure of the network side and the UE according to the present disclosure.

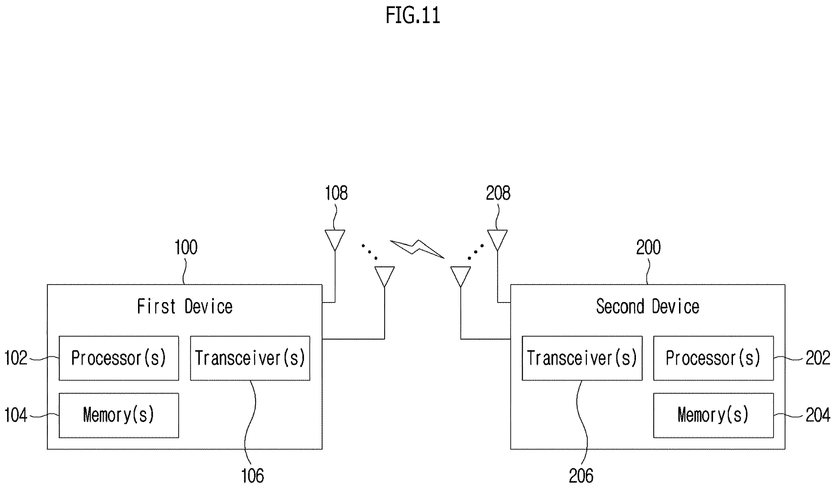

FIG. 10 shows an example of signaling between a network side and a UE in an M-TRP situation to which examples of the present disclosure described above (e.g., a combination of one or more of embodiment 1, embodiment 2, 3 or detailed embodiments thereof) may be applied. Here, UE/a network side is illustrative and may be applied by being substituted with a variety of devices as described by referring to FIG. 11. FIG. 10 is for convenience of description, and it does not limit a scope of the present disclosure. In addition, some step(s) shown in FIG. 10 may be omitted according to a situation and/or a configuration, etc. In addition, the above-described uplink transmission and reception operation, a M-TRP-related operation, etc. may be referred to or used for an operation of a network side/UE in FIG. 10.

In the following description, a network side may be one base station including a plurality of TRPs or may be one cell including a plurality of TRPs. Alternatively, a network side may include a plurality of RRHs(remote radio head)/RRUs(remote radio unit). In an example, an ideal/non-ideal backhaul may be configured between TRP 1 and TRP 2 configuring a network side. In addition, the following description is described based on a plurality of TRPs, but it may be equally extended and applied to transmission through a plurality of panels/cells and may be extended and applied to transmission through a plurality of RRHs/RRUs, etc.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station(gNB, etc.), etc. As described above, a TRP may be distinguished based on at least one of information on a CORESET group (or a CORESET pool) (e.g., an index, an ID), a TCI (or a TCI state), a QCL reference RS, a cell identifier and a scrambling identifier for a RS. As an example, when one terminal is configured to perform transmission or reception with multiple TRPs (or cells), it may mean that multiple CORESET groups (or CORESET pools) are configured for one terminal. As another example, when one terminal is configured to perform transmission or reception with multiple TRPs (or cells), it may mean that a plurality of TCI states are configured to a certain CORESET for one terminal. Such a configuration for TCI state(s) which will be applied to a CORESET group (or a CORESET pool) and/or a CORESET may be performed through higher layer signaling (e.g., RRC signaling, MAC-CE signaling, etc.) and/or physical layer signaling (e.g., DCI).

In addition, a base station may generally mean an object which performs transmission and reception of data with a terminal. For example, the base station may be a concept which includes at least one TP(Transmission Point), at least one TRP(Transmission and Reception Point), etc. In addition, a TP and/or a TRP may include a panel, a transmission and reception unit, etc. of a base station.

The UE may report RLM/BFD-related UE capability information to the network side by the method according to the above-described embodiment(e.g., a combination of one or more of Embodiment 1, Embodiment 2, 3 or detailed Embodiments thereof) (S105). The UE may receive configuration information for M-TRP-based transmission/reception through/using TRP 1 and/or TRP 2 from the network side (S110).

The configuration information may include information related to a network-side configuration (i.e., TRP configuration), resource allocation related to M-TRP-based transmission and reception, and the like. In this case, the configuration information may be transmitted through higher layer signaling (e.g., RRC signaling, MAC-CE, etc.). In addition, when the configuration information is predefined or configured, the corresponding step may be omitted.

For example, as in the above-described embodiment (e.g., Embodiment 1, 2, 3 or a combination of one or more of detailed examples), the configuration information may include CORESET-related configuration information (e.g., ControlResourceSet IE) and/or RLM RS-related configuration information. The CORESET-related configuration information may include a CORESET-related ID (e.g., controlResourceSetID), an index of the CORESET pool for CORESET (e.g., CORESETPoolIndex), time/frequency resource configuration of CORESET, TCI information related to CORESET, etc. For example, the configuration information may include information related to RLM/BFD, etc. as described in the above-described embodiments (e.g., a combination of one or more of embodiment 1, embodiment 2, or detailed embodiments thereof). For example, the TCI information related to the CORESET may be information on one or a plurality of TCI state(s) for each CORESET.

For example, an operation that UE (100 or 200 in FIG. 11) in the above-described stage S115 receives the configuration information from a network side (200 or 100 in FIG. 11) may be implemented by a device in FIG. 11 which will be described after. For example, in reference to FIG. 11, at least one processor 102 may control at least one transceiver 106 and/or at least one memory 104, etc. to receive the configuration information and at least one transceiver 106 may receive the configuration information from a network side.

The UE may receive a reference signal for RLM/BFD through/using TRPs from the network side (S115). For example, a terminal may receive RS 1 through/with serving cell TRP1 and RS 2 through/with ACell TRP 2. For example, RS 1/RS 2 for the RLM/BFD may be SSB/CSI-RS.

For example, an operation that UE (100 or 200 in FIG. 11) in the above-described stage S115 transmits the reference signal to a network side (200 or 100 in FIG. 11) may be implemented by a device in FIG. 11 which will be described after. For example, in reference to FIG. 11, at least one processor 102 may control at least one transceiver 106 and/or at least one memory 104, etc. to transmit the reference signal and at least one transceiver 106 may transmit the reference signal to a network side.

The UE may perform RLM/BFD based on the RS 1 and/or RS 2 received from the network side through/using TRP 1 and/or TRP 2 (S120). For example, the RLM/BFD operation may be performed based on the above-described embodiment (e.g., embodiment 1, 2, 3 or a combination of one or more of the detailed examples thereof). For example, UE measures/estimates a hypothetical BLER based on reception quality of RS 1 and may determine whether of BF/out-of-synch/in-synch accordingly. For example, UE measures/estimates a hypothetical BLER/RSRP/RSRQ/SINR based on reception quality of RS 2 and may determine quality of a corresponding TRP/cell accordingly.

For example, the operation of the UE (100 or 200 in FIG. 11) performing RLM/BFR in step S120 described above may be implemented by the apparatus of FIG. 11 below. For example, referring to FIG. 11, one or more processors 102 may control one or more memories 104 and the like to perform the RLM/BFR operation.

The UE may transmit a report (e.g., BFRQ) for the RLM/BFD to the network side through/using TRP 1 and/or TRP2 (S125). In this case, the report on the RLM/BFD for TRP 1 (e.g., BFRQ, etc.) and the report on the RLM/BFD for TRP 2 (e.g., BFRQ, a RS resource ID, a quality value, etc.) may be transmitted, respectively, or may be combined into one. In addition, the UE is configured to transmit a report on RLM/BFD to the serving cell TRP (e.g., TRP 1), and transmission of a report (e.g., BFRQ, etc.) for RLM/BFD to ACell TRP (e.g., TRP 2) may be omitted. Alternatively, the UE may be configured to transmit a BFD report (e.g., BFRQ, etc.) in the same TRP as the TRP in which the beam failure occurred. Alternatively, the UE may be configured to transmit a report on RLM/BFD (e.g., BFRQ, etc.) in TRP rather than TRP in which beam failure occurs.

Although not shown in FIG. 10, for example, a network side that received reporting on RLM/BFD from UE through/with TRP 1 and/or TRP 2 may perform a procedure for link recovery/beam recovery. In this process, for example, new RLM/BM/BFD-related RS information may be transmitted.

As mentioned above, the network-side/UE operation described above (e.g., embodiment 1, 2, 3 or a combination of one or more of the detailed examples thereof) may be implemented by an apparatus (e.g., the apparatus of FIG. 11) to be described below. For example, the UE may correspond to a first wireless device 100, the network side may correspond to a second wireless device 200, and vice versa may be considered in some cases.

For example, the network-side/UE operation described above (e.g., embodiment 1, 2, 3 or a combination of one or more of the detailed examples thereof) may be processed by one or more processors (e.g., 102, 202) of FIG. 11, and the above-described network-side/UE operations (e.g., embodiment 1, embodiment 2, or a combination of one or more of the detailed examples thereof) may be stored in the memory (e.g., one or more memories (e.g., 104, 204) of FIG. 11) in the form of instructions/programs (e.g., instructions, executable code) for driving one or more processors (e.g., 102 and 202) of FIG. 11.

General Device to which the Present Disclosure may be applied

FIG. 11 is a diagram which illustrates a block diagram of a wireless communication system according to an embodiment of the present disclosure.

In reference to FIG. 11, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for performing measurement by a terminal in a wireless communication system, the method comprising:

   receiving, from a network, configuration information on at least one measurement resource associated with each of at least one non-serving entity;
   monitoring event occurrence based on a measurement result for the at least one measurement resource; and
   transmitting, to the network, indication information based on the event,
   wherein a criteria for a measurement result which is a basis of event occurrence for the non-serving entity is the same as a criteria for a measurement result which is a basis of event occurrence for a serving entity, or the criteria for the measurement result which is the basis of event occurrence for the non-serving entity is lower than the criteria for the measurement result which is the basis of event occurrence for the serving entity.

2. The method of claim 1, wherein:

   the event corresponds to a quality related to the non-serving entity corresponding to the measurement result being less than or equal to or being less than a predetermined threshold,
   the indication information includes at least one of a notification of the event occurrence or a report of a measurement result associated with the event occurrence.

3. The method of claim 1, wherein:
   the criteria for the measurement result which is the basis of event occurrence for the non-serving entity or the serving entity includes at least one of a length of a time duration to which filtering for the measurement result is applied, a reporting layer, a periodicity of the measurement resource, or a frequency density of the measurement resource.

4. The method of claim 1, wherein:
   a maximum value for a sum of a number of measurement resource for the non-serving entity and a number of measurement resource for the serving entity is defined or configured.

5. The method of claim 4, wherein:
   the sum of the number of the measurement resource includes a sum of a number of measurement resource related to a first type measurement and a number of measurement resource related to a second type measurement.

6. The method of claim 4, wherein:

   the sum of the number of the measurement resource includes a sum of measurement resources related to a first type measurement,
   a number of measurement resource related to a second type measurement is defined or configured independently for the non-serving entity and the serving entity.

7. The method of claim 4, wherein:
   the number of measurement resource for the non-serving entity and the number of measurement resource for the serving entity are based on a definition or a configuration for a priority or a ratio.

8. The method of claim 1, wherein:
   a maximum value for a number of measurement resource for the non-serving entity is defined or configured independently from a maximum value for a number of measurement resource for the serving entity.

9. The method of claim 1, wherein:
   a measurement resource for the non-serving entity corresponds to a part or all of predefined or preconfigured measurement resources.

10. The method of claim 9, wherein the measurement resource for the non-serving entity corresponds to at least one of:

    a transmission configuration indicator (TCI) state or a reference signal (RS) configured for a control resource set (CORESET) pool or a CORESET associated with identification information of the non-serving entity; or
    a measurement resource associated with radio resource management (RRM) or mobility configured for the non-serving entity.

**11.** The method of claim 10, wherein:
the TCI state or the RS configured for the CORESET pool or the CORESET associated with the identification information of the non-serving entity is determined based on at least one of an index order, a time density, a frequency density, a type, or a usage.

**12.** The method of claim 1, wherein:

the measurement result includes at least one of a first type measurement or a second type measurement, the first type measurement has higher complexity or higher precision than the second type measurement.

**13.** A terminal performing measurement in a wireless communication system, the terminal comprising:

at least one transceiver; and
at least one processor coupled to the at least one transceiver,
the at least one processor is configured to:

receive, through the at least one transceiver, from a network, configuration information on at least one measurement resource associated with each of at least one non-serving entity;
monitor event occurrence based on a measurement result for the at least one measurement resource; and
transmit, through the at least one transceiver, to the network, indication information based on the event,

wherein a criteria for a measurement result which is a basis of event occurrence for the non-serving entity is the same as a criteria for a measurement result which is a basis of event occurrence for a serving entity or the criteria for the measurement result which is the basis of event occurrence for the non-serving entity is lower than the criteria for the measurement result which is the basis of event occurrence for the serving entity.

**14.** A method for receiving indication information by a base station from a terminal in a wireless communication system, the method comprising:

transmitting, to the terminal, configuration information on at least one measurement resource associated with each of at least one non-serving entity; and
receiving, from the terminal, the indication information based on an event associated with a measurement result for the at least one measurement resource,
wherein a criteria for a measurement result which is a basis of event occurrence for the non-serving entity is the same as a criteria for a measurement result which is a basis of event occurrence for a serving entity or the criteria for the measurement result which is the basis of event occurrence for the non-serving entity is lower than the criteria for the measurement result which is the basis of event occurrence for the serving entity.

**15.** A base station receiving indication information from a terminal in a wireless communication system, the base station comprising:

at least one transceiver; and
at least one processor coupled to the at least one transceiver,
the at least one processor is configured to:

transmit, through the at least one transceiver, to the terminal, configuration information on at least one measurement resource associated with each of at least one non-serving entity; and
receive, through the at least one transceiver, from the terminal, the indication information based on an event associated with a measurement result for the at least one measurement resource,

wherein a criteria for a measurement result which is a basis of event occurrence for the non-serving entity is the same as a criteria for a measurement result which is a basis of event occurrence for a serving entity or the criteria for the measurement result which is the basis of event occurrence for the non-serving entity is lower than the criteria for the measurement result which is the basis of event occurrence for the serving entity.

**16.** A processing device configured to control a terminal which performs measurement in a wireless communication system, the processing device comprising:

at least one processor; and
at least one computer memory operatively coupled to the at least one processor and storing instructions for performing a method according to Claim 1 based on being executed by the at least one processor.

17. At least one non-transitory computer readable medium storing at least one instruction, wherein:
the at least one instruction controls a device performing uplink transmission in a wireless communication system to perform a method according to Claim 1 by being executed by at least one processor.

# FIG.1

NGC

AMF/UPF          AMF/UPF

NG-C/U          NG-C/U

NG-C/U          NG-C/U

gNB          Xn          gNB

Xn          Xn

gNB

NG-RAN

## FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

FIG.4

FIG.5

Resource grid

A carrier
(up to 3300 subcarriers, i.e., 275 RBs)

A BWP

1 RB=12 subcarrier

1 RE

1 subcarrier

1 Symbol

l=0 ·····

k=0

FIG.6

INITIAL CELL SEARCH

PSS/SSS& [DLRS]& PBCH — S601

SYSTEM INFORMATION RECEPTION

PDCCH/ PDSCH (BCCH) — S602

RANDOM ACCESS PROCEDURE

PRACH — S603
PDCCH/ PDSCH — S604
PUSCH — S605
PDCCH/ PDSCH — S606

GENERAL DL/UL Tx/Rx

PDCCH/ PDSCH — S607
PUSCH/ PUCCH — S608

· DL/UL ACK/NACK
· UE CQI/PMI RI REPORT
  USING PUSCH AND PUCCH

FIG.7

TRP 1        TRP 2

Layer group #1    Layer group #2
for CW #1       for CW #1

UE1

(a)

TRP 1        TRP 2

Layer group #1    Layer group #2
for CW #1       for CW #2

UE1

(b)

FIG.8

Receive, from network, configuration information
on at least one measurement resource associated
with each of at least one non-serving entity
— S810

Monitor event occurrence based on
measurement result for
at least one measurement resource
— S820

Transmit, to network, indication information
based on event
— S830

FIG.9

Transmit, to terminal, configuration information
on at least one measurement resource associated
with each of at least one non-serving entity                     S910

Receive, from terminal, indication information
based on event associated with a measurement                     S920
result for at least one measurement resource

FIG.10

FIG.11

## INTERNATIONAL SEARCH REPORT

| International application No. |
| --- |
| **PCT/KR2022/010325** |

### A. CLASSIFICATION OF SUBJECT MATTER

**H04L 5/00**(2006.01)i; **H04B 17/309**(2014.01)i; **H04B 17/373**(2014.01)i; **H04B 7/0408**(2017.01)i

According to International Patent Classification (IPC) or to both national classification and IPC

### B. FIELDS SEARCHED

Minimum documentation searched (classification system followed by classification symbols)

H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 측정(measurement), 자원(resource), 이벤트(event), 모니터링(monitoring), 비-서빙(non-serving), 기준(threshold)

### C. DOCUMENTS CONSIDERED TO BE RELEVANT

| Category* | Citation of document, with indication, where appropriate, of the relevant passages | Relevant to claim No. |
| --- | --- | --- |
| Y<br>A | HUAWEI et al. Discussion on RRM impacts for R17 NR FeMIMO. R4-2110305, 3GPP TSG-RAN WG4 Meeting #99-e. 11 May 2021.<br>See pages 1-13. | 1-4,8-17<br>5-7 |
| Y | NOKIA et al. Power consumption reduction in RRM measurements. R2-1904309, 3GPP TSG-RAN WG2 Meeting #105bis. Xian, China. 28 March 2019.<br>See pages 1-8. | 1-4,8-17 |
| Y | VIVO. Further discussion on multi beam enhancement. R1-2104343, 3GPP TSG-RAN WG1 Meeting #105-e. 11 May 2021.<br>See pages 1-33. | 11 |
| A | SAMSUNG. [AT114-e][036][feMIMO] InterCell mTRP and L1/L2 mobility (Samsung). R2-2106664, 3GPP TSG-RAN WG2 Meeting #114-e. 24 May 2021.<br>See pages 1-28. | 1-17 |
| A | CATT. Discussions on enhancements on multi-beam operation. R1-2102598, 3GPP TSG-RAN WG1 Meeting #104b-e. 07 April 2021.<br>See pages 1-16. | 1-17 |

☐ Further documents are listed in the continuation of Box C.  ☐ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **26 October 2022** | **26 October 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)